# DEMANDE DE BREVET EUROPEEN

(11) **EP 1 036 874 A2**
(43) Date de publication de la demande: **20.09.2000**
(21) Numéro de dépôt: 00810213.9
(22) Date de dépôt: 14.03.2000
(51) Int. Cl.: D06F 35/00

(54) **Cellule de blanchiment et de désinfection et application de celle-ci aux machines à laver de linge**

(30) Priorité: 14.03.1999 CH 46099
(71) Demandeur: C.S.E.M. CENTRE SUISSE D'ELECTRONIQUE ET DE MICROTECHNIQUE SA, 2007 Neuchâtel (CH)
(72) Inventeur: Haenni, Werner, 2034 Peseux (CH); Perret, André, 2206 Les Geneveys-sur-Coffrane (CH)
(74) Mandataire: Brulliard, Joel

(57) **Abrégé**

La présente invention concerne l'application d'une cellule d'électrolyse, comportant une anode, une cathode et au moins une électrode bipolaire disposée entre l'anode et la cathode, à une machine à laver le linge pour assurer le blanchiment et/ou la désinfection de ce dernier. La cellule est, par ailleurs, caractérisée en ce que ladite électrode bipolaire comporte un substrat en matériau conducteur et une couche compacte de diamant rendu conducteur par un dopant et recouvrant ledit substrat.

## Description

La présente invention concerne, de manière générale, une cellule de blanchiment et de désinfection et son application aux machines à laver le linge. Plus particulièrement, elle concerne une cellule d'électrolyse à électrode bipolaire (ou électrode bipolaire), c'est-à-dire une cellule dans laquelle l'anode et la cathode sont séparées par au moins une troisième électrode, dite électrode bipolaire, formant elle-même à la fois une anode et une cathode.

Une cellule d'électrolyse à électrode bipolaire particulièrement avantageuse pour traiter les eaux usées, parce qu'elle permet l'oxydation de leurs contaminants, a été décrite dans la demande de brevet français N0. 99 02 482. Il a été trouvé qu'une telle cellule permettait la génération d'ozone (03), en même temps que la production d'eau oxygénée (H202). Considérant la grande stabilité de l'électrode bipolaire et connaissant les propriétés de l'ozone et de l'eau oxygénée, il est donc proposé d'utiliser une telle cellule dans les machines à laver le linge, ou analogue, pour assurer, à la fois, une opération de désinfection et de blanchiment.

Les propriétés de l'ozone sont déjà connues. Il est également connu de générer de l'ozone par plasma ou par un appareillage à décharge électrique. Le coût et la complexité de tels appareils ne permettait pas d'envisager leur utilisation dans des machines à laver domestiques, ni même industrielles.

Le but principal de la présente invention est de proposer une cellule d'électrolyse à électrode bipolaire, présentant la double particularité d'avoir une longue durée de vie et de ne pas libérer de produit polluant dans l'électrolyte, et son application dans une machine à laver le linge pour assurer le blanchiment de ce dernier et sa désinfection.

De façon plus précise, la cellule d'électrolyse comporte une anode, une cathode et au moins une électrode bipolaire disposée entre l'anode et la cathode, et est caractérisée en ce que cette électrode bipolaire comporte un substrat en matériau conducteur et une couche compacte de diamant rendu conducteur par un dopant et recouvrant le substrat.

Avantageusement, l'anode et la cathode comportent également un substrat en matériau conducteur et une couche compacte de diamant rendu conducteur par un dopant et recouvrant le substrat.

Le matériau formant le substrat peut être choisi parmi le silicium et le carbure de silicium, tous deux rendus conducteurs par dopage. Il peut être aussi un métal réfractaire de transition choisi, de préférence, parmi le zirconium, le molybdène, le tantale, le niobium et le titane.

Selon une autre caractéristique de l'invention, le carbure de silicium se présente sous la forme d'un substrat poreux.

De préférence, le dopant utilisé pour rendre le diamant conducteur est du bore. La couche de diamant a, par ailleurs, une épaisseur de 0,1 à 1 µm.

La cellule utilisée selon l'invention peut comporter soit une électrode bipolaire sous la forme d'une plaque, soit une pluralité d'électrodes bipolaires sous la forme de billes.

D'autres caractéristiques de l'invention ressortiront de la description qui va suivre, faite en regard des dessins annexés, dans lesquels:
- la figure 1 représente une cellule d'électrolyse comportant des électrodes bipolaires formées de plaques,
- la figure 2 représente une cellule d'électrolyse comportant des électrodes bipolaires sous forme de billes en suspension,
- la figure 3 montre, en coupe, l'une des billes de la figure 2, et
- la figure 4 montre, en coupe, une variante de cellule d'électrolyse dont les électrodes bipolaires sont réalisées en carbure de silicium poreux.

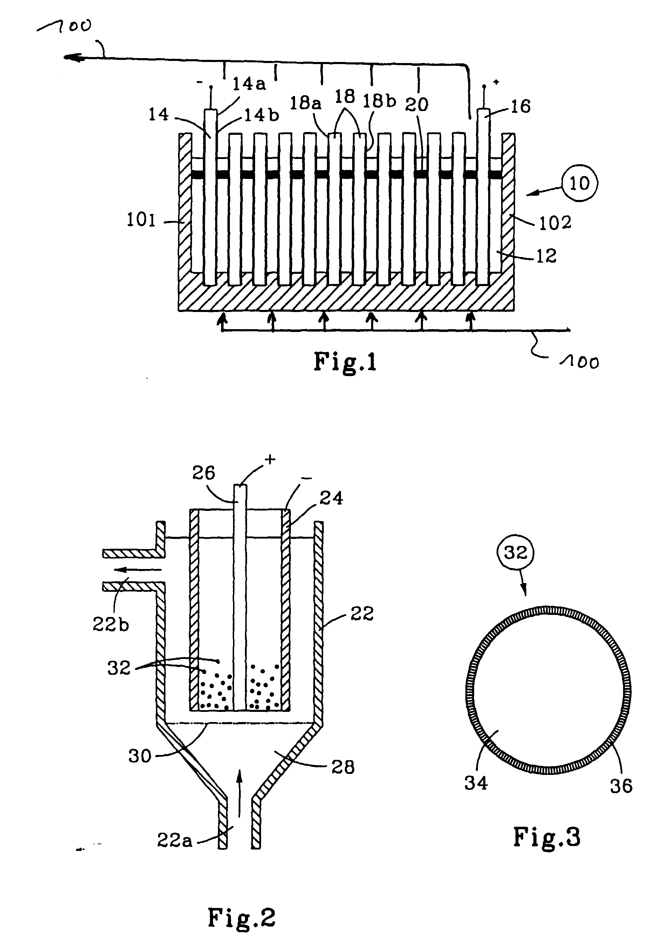

Sur la figure 1, on peut voir, en coupe, une cellule d'électrolyse qui comporte un bac rectangulaire 10 en matériau isolant, contenant un électrolyte 12. Il comprend deux parois d'extrémité 101 et 102, au voisinage desquelles sont disposées respectivement une anode 14 et une cathode 16 se présentant sous la forme de plaques parallèles entre elles.

Plusieurs électrodes bipolaires 18, également formées de plaques, sont interposées, à intervalles réguliers, dans l'espace compris entre l'anode et la cathode, parallèlement à elles.

Bien entendu, l'anode 14, la cathode 16 et les électrodes bipolaires 18 ne doivent pas être en contact les unes avec les autres. Des cales 20 en matériau isolant sont donc interposées entre elles à cet effet.

Dans le cas de l'utilisation d'une telle cellule d'électrolyse dans une machine à laver le linge, le bac 10 est traversé par le liquide de lavage selon le flux représenté par les flèches 100. Il sera, toutefois, préférable de ne faire traverser la cellule par le liquide qu'une fois le cycle de lavage terminé, ce qui peut être réalisé par tout moyen connu de l'homme de métier tel que, par exemple, des vannes commandées par le programme de la machine à laver.

Tant l'anode 14 et la cathode 16 que les électrodes bipolaires 18 sont formées d'un substrat électriquement conducteur, portant la référence a, revêtu sur ses deux faces, au moins dans sa partie immergée, d'une couche b de diamant dopé pour être électriquement conducteur.

Le substrat peut être formé d'une plaque de silicium ou de carbure de silicium qui, tous les deux, ont été dopés, par des procédés connus de l'homme du métier, de manière à réduire leur résistivité à une valeur qui, typiquement, est de l'ordre de 1 à 3 m□cm. Le substrat peut également être formé de carbone vitreux ou d'un matériau composite comportant un réseau de fibres de carbone amalgamé avec du carbone pyrolitique et/ou du carbure de silicium.

Le substrat peut être aussi une plaque de métal, de préférence un métal réfractaire de transition, avantageusement choisi parmi le zirconium, le molybdène, le tantale, le niobium ou le titane.

Quel qu'il soit, le substrat conducteur doit initialement porter des particules de diamant formant des germes de croissance pour la couche de diamant qui est formée à sa surface, selon un procédé connu, par HFCVD (hot filament chemical vapor deposition) dans une enceinte à une température comprise entre 600 et 900°C. Le diamant est rendu conducteur par dopage à l'aide de bore qui est introduit durant l'opération de dépôt de la couche sous la forme de gaz triméthylebore (TMB) ou de toute autre substance (azote, phosphore, carbone) ayant le même effet.

Le procédé décrit ci-dessus permet de réaliser des anodes, cathodes et électrodes bipolaires recouvertes sur leurs deux faces d'un film de diamant à structure polycristalline compacte, dont la résistivité est inférieure ou égale à 0,2 □cm, pour une concentration en bore de 3500 ppm environ. L'épaisseur de cette couche conductrice de diamant dopé est, typiquement, comprise entre 0, 1 et 1 µm.

Pour plus de détails sur la fabrication de telles électrodes, on se référera à l'article intitulé "Diamond électrodes and microelectrodes" de A. Perret et al., paru dans Electrochemical Society Proceedings, Volume 97-32.

En variante, les faces externes de l'anode 14 et de la cathode 16 (c'est à dire celles qui sont en regard des extrémités 101 et 102 du bac) peuvent être également revêtues d'une couche de diamant.

Selon une autre variante, seules les électrodes bipolaires sont réalisées comme indiqué ci-dessus, l'anode et la cathode étant alors en un matériau conducteur, tel que du silicium, du carbure de silicium, du graphite, du carbone vitreux, un matériau composite à base de fibres de carbone, comme mentionné précédemment, ou encore du tantale, du titane, du zirconium, du niobium ou du molybdène.

La figure 2 montre un autre type de cellule d'électrolyse utilisant des électrodes bipolaires sous forme de billes. Cette cellule comporte un bac cylindrique 22 à l'intérieur contenant une anode tubulaire 24 et une cathode en forme de tige 26 disposée selon l'axe de l'anode. L'anode 24 et la cathode 26 sont, mise à part leur forme, et donc pour ce qui concerne le substrat et la couche de diamant qui les constituent, identiques aux électrodes 14 et 16 décrites dans le mode de réalisation de la figure 1.

Le bac 22 comporte, à sa base, une entrée 22a et, à sa partie supérieure, une sortie 22b, respectivement destinées à faire pénétrer et sortir une solution d'électrolyte 28. Une membrane 30 est placée dans la partie inférieure du bac, sous les deux électrodes et au-dessus de l'entrée 22a. Elle présente une structure poreuse, de manière à laisser passer l'électrolyte lorsqu'il remonte de l'entrée 22a vers la sortie 22b. Des électrodes bipolaires 32, formées d'une pluralité de particules sphériques maintenues en suspension dans l'électrolyte sont disposées dans l'espace situé au-dessus de la membrane. Leur diamètre est, typiquement, compris entre 0,5 et 10 mm. La structure de la membrane est choisie pour que ces billes ne puissent pas la traverser.

Comme le montre la figure 3, chaque électrode bipolaire 32 comporte un noyau sphérique 34, avantageusement en carbure de silicium dopé, par des procédés connus de l'homme du métier, afin de réduire sa résistivité à une valeur de l'ordre de 1 à 3 m□cm. La bille ainsi rendue conductrice est totalement recouverte d'une couche 36 de diamant conducteur dopé au bore ayant, typiquement, une épaisseur de l'ordre de 0,1 à 1 µm. Comme indiqué à propos de la réalisation des électrodes de la figure 1, le dopage au bore est réalisé à l'aide de gaz triméthylebore (TMB) introduit dans l'enceinte HFCVD durant l'opération de dépôt du diamant. Comme déjà mentionné, d'autres dopants, tels que l'azote, le phosphore ou le carbone, peuvent être utilisés pour rendre le diamant électriquement conducteur. Cette couche présente une structure polycristalline compacte, de sorte que le noyau 34 est totalement protégé.

La fabrication de billes en carbure de silicium revêtu de diamant est connue pour des applications dans des roulements à billes. Pour plus de détails, on se référera, par exemple, à la publication de M. Drory et al. intitulée « Microstructural effects on the performance of CVD diamond coatings for bearing applications » à la 2nd International Conference on the Applications of Diamond Films and Related Materials », tenue à Tokyo en 1993.

Des électrodes bipolaires sphériques ainsi obtenues permettent d'éviter une usure et une pollution, du seul fait qu'elles sont recouvertes d'une couche de diamant.

Le carbure de silicium dopé est choisi pour constituer le noyau des électrodes bipolaires, en raison de sa faible densité qui permet à ces billes 32 de rester en suspension dans l'électrolyte lorsque celui-ci remonte dans le bac. En variante, le noyau 34 des sphères peut cependant être en silicium dopé, en graphite ou en métal réfractaire de transition et, plus particulièrement, le zirconium, le molybdène, le tantale, le niobium ou le titane.

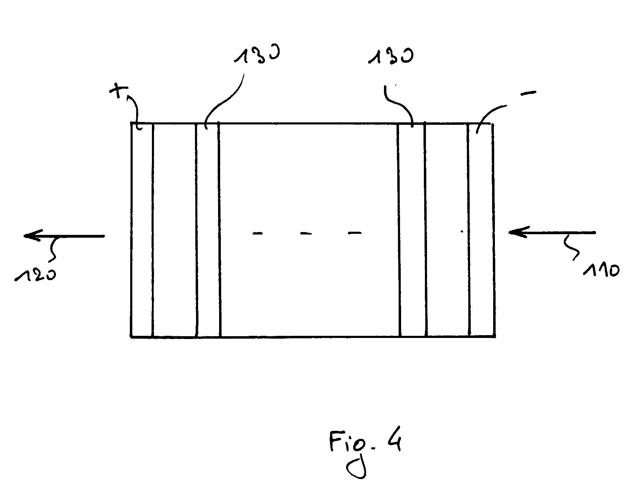

La figure 4 présente une variante de cellule pouvant être avantageusement utilisée selon l'invention. Selon cette variante, les électrodes bipolaires 130, l'anode (+) et la cathode (-) sont réalisées en carbure de silicium poreux qui, après dopage au bore, est ensuite revêtu d'une couche de diamant selon les procédés indiqués ci-dessus. Il s'ensuit que la structure des électrodes permet le passage du liquide de manière transversale, comme indiqué par les flèches 110 et 120. De par la surface effective plus grande des électrodes et la disposition du flux, l'efficacité d'une telle cellule est améliorée et son montage facilité. Il convient encore de noter que l'ozone (O3) est engendré du côté de l'anode, tandis que de l'hydrogène (H2) est engendré du côté de la cathode.

## Revendications

1. Cellule d'électrolyse comportant une anode, une cathode et au moins une électrode bipolaire disposée entre l'anode et la cathode, ladite électrode bipolaire comportant un substrat en matériau conducteur et une couche compacte de diamant rendu conducteur par un dopant et recouvrant ledit substrat, caractérisée en ce qu'elle est utilisée dans une machine à laver le linge pour assurer le blanchiment de ce dernier et sa désinfection.

2. Cellule d'électrolyse selon la revendication 1, caractérisée en ce que l'anode et la cathode comportent également un substrat en matériau conducteur et une couche compacte de diamant conducteur recouvrant ledit substrat.

3. Cellule d'électrolyse selon l'une des revendications 1 et 2, caractérisée en ce que le matériau formant ledit substrat est choisi parmi le silicium et le carbure de silicium, tous deux rendus conducteurs par dopage, ou encore le graphite, le carbone vitreux, ou un matériau composite comportant un réseau de fibres de carbone amalgamé avec du carbone pyrolitique et/ou du carbure de silicium.

4. Cellule d'électrolyse selon l'une des revendications 1 et 2, caractérisée en ce que le matériau formant ledit substrat est un métal réfractaire de transition.

5. Cellule d'électrolyse selon l'une des revendications 1 et 2, caractérisée en ce que le matériau formant ledit substrat est en carbure de silicium poreux.

6. Cellule d'électrolyse selon la revendication 4, caractérisée en ce que ledit métal de transition est choisi parmi le zirconium, le molybdène, le tantale, le niobium et le titane.

7. Cellule d'électrolyse selon l'une des revendications 1 à 5, caractérisée en ce que dopant du diamant est du bore.

8. Cellule d'électrolyse selon l'une des revendications 1 à 6, caractérisée en ce que la couche de diamant a une épaisseur comprise entre 0,1 et 1 µm.

9. Cellule d'électrolyse selon l'une des revendications 1 à 7, caractérisée en ce que ladite électrode bipolaire est sous la forme d'une plaque.

10. Cellule d'électrolyse selon l'une des revendications 1 à 7, caractérisée en ce qu'elle comporte une pluralité d'électrodes bipolaires sous la forme de billes.
